# FASCICULE DE BREVET EUROPEEN

(11) **EP 2 783 192 B1**
(45) Date de publication et mention de la délivrance du brevet: **17.02.2021**
(21) Numéro de dépôt: 11835323.4
(22) Date de dépôt: 22.11.2011
(51) Int. Cl.: G01J 1/44

(54) **CIRCUIT DE DÉTECTION AVEC UN MODULE DE RÉDUCTION DU BRUIT**
DETEKTORSCHALTUNG MIT EINEM GERÄUSCHREDUZIERENDEN MODUL
DETECTION CIRCUIT WITH A NOISE-REDUCTION MODULE

(43) Date de publication de la demande: 01.10.2014
(73) Titulaire: LYNRED, 91120 Palaiseau (FR)
(72) Inventeur: RUBALDO, Laurent, F-38600 Fontaine (FR); RICARD Nicolas, F-38500 Coublevie (FR)
(74) Mandataire: Talbot, Alexandre
(86) Numéro de dépôt international: PCT/FR2011/000613
(87) Numéro de publication internationale: WO 2013/076379

(56) Documents cités:
- EP-A1- 2 178 288
- EP-A2- 2 302 341
- NICOLA ZANOLLA ET AL: "Reduction of RTS Noise in Small-Area MOSFETs Under Switched Bias Conditions and Forward Substrate Bias", IEEE TRANSACTIONS ON ELECTRON DEVICES, IEEE SERVICE CENTER, PISACATAWAY, NJ, US, vol. 57, no. 5, 1 mai 2010 (2010-05-01), pages 1119-1128, XP011305632, ISSN: 0018-9383

## Description

### Domaine technique de l'invention

L'invention est relative à un circuit de détection comprenant un interrupteur connecté entre une photodiode et un circuit intégrateur.

L'invention est également relative à un procédé fonctionnement d'un tel circuit de détection.

### État de la technique

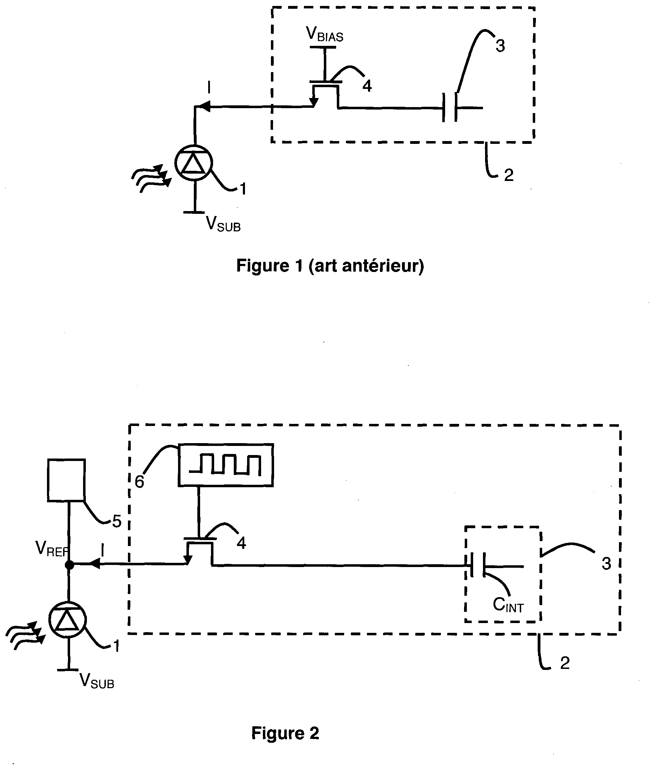

Comme illustré à la figure 1, dans les circuits de détection conventionnels, une photodiode 1, polarisée en inverse, délivre un courant représentatif d'une scène observée. La photodiode 1 délivre ce courant, pendant une durée prédéfinie, à un module de lecture 2 qui possède un dispositif intégrateur 3.

Le module de lecture 2 comporte un transistor d'injection 4 qui est connecté au dispositif intégrateur 3. Un potentiel d'injection V_{BIAS} est appliqué sur l'électrode de grille du transistor d'injection 4 et sert dans la polarisation de la photodiode 1. Un tel circuit est communément appelé circuit à injection directe (Direct Injection en anglais).

Le courant délivré par la photodiode 1 est traité par le circuit de lecture 2 afin de fournir une information sur la scène observée.

De manière théorique, le courant fourni est proportionnel à l'intensité lumineuse de la scène observée. Cependant, le circuit de détection n'est pas parfait et il existe une composante de bruit à l'intérieur de chacun des éléments du circuit de détection. Il existe notamment une composante de bruit basse fréquence dont l'influence peut être observée à l'œil au niveau du signal émis par le circuit de lecture.

Même si des progrès importants ont été réalisés sur le module de lecture et sur les circuits de traitement de cette information, il existe un courant parasite aléatoire et discontinu provenant de la photodiode qui modifie la valeur du courant normalement attendu pour la scène observée. Cette modification du courant est particulièrement gênante lorsque le circuit de détection utilise des courants de faible intensité. La modification du courant fausse, par exemple, la valeur représentative du noir, ce qui peut modifier l'analyse postérieure de la scène observée. Afin de pallier ces problèmes, différentes approches ont été proposées en utilisant des moyens de quantification du courant parasite et/ou des moyens de soustraction du courant parasite.

Il en résulte des circuits munis de blocs supplémentaires de correction qui posent de nombreux problèmes d'intégration lorsque l'on recherche des circuits de taille réduite et/ou des circuits avec une consommation électrique maîtrisée.

La publication de ZANOLLA ET AL, "Réduction of RTS Noise in Small-Area MOSFETs Under Switched Bias Conditions and Forward Substrate Bias", IEEE TRANSACTIONS ON ELECTRON DEVICES, IEEE SERVICE CENTER, PISACATAWAY, NJ, US, (20100501), vol. 57, no. 5 traite du bruit RTS dans les transistors MOSFET. Le document D1 montre que l'application d'une tension alternative sur la grille du transistor MOSFET, afin de le faire changer d'état, a pour effet de réduire l'importance du bruit RTS sur les caractéristiques électriques mesurées.

Le document EP 2 302 341 traite d'une solution au phénomène d'éblouissement. Un premier interrupteur est monté en parallèle du condensateur pour faire la remise à zéro des charges accumulées et un deuxième interrupteur est également monté en parallèle du condensateur pour générer un courant de contre-réaction lorsque la tension aux bornes du condensateur dépasse un seuil.

### Objet de l'invention

L'invention a pour objet un circuit de détection qui est facile à mettre en œuvre et qui réduit l'influence du bruit de la photodiode dans le circuit de détection.

Le dispositif selon l'invention est caractérisé en ce qu'il comprend
- un interrupteur,
- une photodiode connectée à une première borne principale de l'interrupteur,
- un intégrateur connecté à une seconde borne principale de l'interrupteur et agencé pour recevoir le signal émis par la photodiode,
- un circuit de basculement alternatif de la polarisation de la photodiode entre une polarisation en inverse et un autre état, l'interrupteur étant configuré pour être à l'état bloquant lorsque la photodiode est dans l'autre état.

L'invention a également pour objet un procédé de fonctionnement qui soit facile à mettre en œuvre tout en assurant une réalisation fiable et répétable de la réduction du bruit de la photodiode.

Le procédé de fonctionnement selon l'invention est caractérisé en ce qu'il comporte :
- prévoir un circuit de détection utilisant un interrupteur connecté entre une photodiode et un intégrateur,
- durant une première période, d'une phase d'acquisition, l'application d'une première condition de polarisation aux bornes de la photodiode pour polariser la photodiode en inverse et
- durant une deuxième période, de la phase d'acquisition, l'application d'une deuxième condition de polarisation pour placer la photodiode dans un autre état, l'interrupteur étant configuré de manière à être passant durant la première période et être bloquant durant la deuxième période, l'alternance entre les première et seconde périodes étant réalisée à une fréquence supérieure à 10Hz.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un circuit de détection avec injection directe selon l'art antérieur,
- les figures 2 à 5 représentent, de manière schématique, différents modes de réalisation d'un circuit de détection avec un module de réduction du bruit de la photodiode.

### Description d'un mode de réalisation préférentiel de l'invention

Comme illustré aux figures 2 à 5, le circuit de détection comporte une photodiode 1 qui est connectée à un circuit de lecture 2. Le circuit de lecture comporte un intégrateur 3 qui stocke les charges provenant de la photodiode 1. Le circuit de lecture 2 transforme un signal en courant en un signal en tension. Le dispositif intégrateur 3 comporte un condensateur d'intégration C_{INT}. La photodiode 1 détecte avantageusement un rayonnement infrarouge.

La photodiode est avantageusement réalisée dans un substrat de type III-V, par exemple, InP, GaAS, GaAlAs, ou de type II-VI par exemple HgCdTe.

Selon les modes de réalisation, l'intégrateur 3 peut être, par exemple, un dispositif à injection directe, un dispositif à injection directe contreréactionnée, un dispositif de type amplificateur transimpédance capacitif ou un simple condensateur d'intégration C_{INT}. L'intégrateur 3 comporte, avantageusement, des moyens de remise à zéro des charges stockées dans le condensateur d'intégration C_{INT}.

Dans un mode de réalisation particulier, le circuit de détection comporte un circuit de basculement de la polarisation de la photodiode 1 entre une polarisation inverse et un autre état, par exemple une polarisation directe ou un état de circuit ouvert qui entraîne un potentiel flottant.

Durant une première période, lorsque la photodiode 1 est polarisée en inverse, le rayonnement lumineux reçu est converti en un signal électrique et le taux de conversion est défini de manière stable ou sensiblement stable au moyen des conditions de polarisation appliquées.

Il a été découvert que lorsque la photodiode 1 est en polarisation directe ou dans un état flottant, durant une deuxième période, la recombinaison est favorisée et les pièges sont recombinés. De cette manière, la photodiode 1 émet une quantité moindre de porteurs parasites qui ne sont pas représentatifs de la scène observée. La photodiode 1 se rapproche alors de ses caractéristiques idéales.

Comme les conditions de polarisation de la photodiode sont modifiées, le taux de conversion du signal lumineux en un signal électrique est également modifié et il est avantageux de bloquer le signal émis par la photodiode 1 lorsqu'elle se trouve dans un état de nature différente, c'est-à-dire hors de son état de polarisation inverse. De cette manière on évite de stocker dans l'intégrateur un autre signal parasite.

Durant l'acquisition effective des charges, la photodiode 1 est polarisée en inverse. Une première borne de la photodiode 1 est soumise à la polarisation V_{SUB} provenant par exemple du substrat. Dans le mode de réalisation de la figure 2, la seconde borne de la photodiode 1 est reliée à des moyens 5 de polarisation qui imposent une tension de référence VREF. De cette manière, la photodiode 1 est polarisée entre les tensions VREF et V_{SUB} imposées à chaque borne de la photodiode 1. Il est alors possible de moduler les conditions d'alimentation de la photodiode en modifiant la tension appliquée par le substrat ou par le circuit 5 de polarisation ou les deux. Dans le mode de réalisation illustré à la figure 2, le circuit 5 peut servir de circuit de basculement de la polarisation de la photodiode. La source de potentiel appliquant le potentiel V_{SUB} peut également servir de circuit de basculement de la polarisation de la photodiode

Un interrupteur 4, par exemple un transistor d'injection dans le mode de réalisation illustré, est connecté entre la photodiode 1 et l'intégrateur 3. Le transistor d'injection 4 comporte une première borne principale, par exemple une électrode de source/drain, reliée à la photodiode 1. Une seconde borne principale du transistor d'injection 4, par exemple une autre électrode de source/drain, est reliée à l'intégrateur 3.

L'interrupteur 4 est configuré pour être à l'état passant lorsque la photodiode est polarisée en inverse et pour être à l'état bloquant lorsque la photodiode est dans un autre état. De cette manière l'interrupteur 4 qui est normalement traversé par le signal émis par la photodiode 1 en direction du circuit de lecture 3 peut bloquer le passage du signal si les conditions de polarisation de la photodiode 1 ne sont pas celles recherchées pour une acquisition fiable.

Le circuit de détection peut comporter des moyens 5 d'application d'une tension alternative sur l'électrode de commande de l'interrupteur 4. Cette tension alternative est choisie de manière à faire basculer l'interrupteur 4 entre ses états bloquant et passant. Dans le cas d'un transistor d'injection 4, le basculement est avantageusement réalisé dans son canal de conduction entre un régime d'inversion et un état de nature différente, c'est-à-dire un régime d'accumulation ou de déplétion. Le transistor d'injection 4 est donc alternativement en régime d'inversion puis en régime d'accumulation/déplétion dans son canal de conduction et autour.

Durant la première période, une première tension est appliquée sur l'électrode de commande ce qui permet d'avoir l'interrupteur à l'état passant. Durant la première période, le transit des porteurs entre la photodiode 1 et l'intégrateur 3 est possible et les charges électriques sont stockées dans l'intégrateur 3. La première tension est configurée pour placer le canal de conduction du transistor dans un régime d'inversion. Durant la seconde période, une seconde tension est appliquée sur l'électrode de commande de l'interrupteur. Cette seconde tension permet de bloquer le passage du courant entre la photodiode 1 et l'intégrateur 3. La seconde tension est configurée pour placer le canal de conduction du transistor dans un régime d'accumulation ou un régime de déplétion.

Le régime d'inversion est obtenu lorsque la tension V_{GS} entre l'électrode de grille et l'électrode de source est supérieure ou égale à la tension de seuil Vₜₕ du transistor nMOS. L'autre état (la déplétion ou l'accumulation) est obtenu lorsque la tension V_{GS} entre l'électrode de grille et l'électrode de source est inférieure à la tension de seuil Vₜₕ du transistor nMOS. Par exemple, le régime d'accumulation ou de déplétion est obtenu lorsque la tension V_{GS} est négative pour un transistor nMOS.

Le régime d'inversion est obtenu lorsque la tension V_{GS} entre l'électrode de grille et l'électrode de source est inférieure ou égale à la tension de seuil Vₜₕ du transistor pMOS. L'autre état (la déplétion ou l'accumulation) est obtenue lorsque la tension V_{GS} entre l'électrode de grille et l'électrode de source est supérieure à la tension de seuil Vₜₕ du transistor pMOS. Par exemple, le régime d'accumulation est obtenu lorsque la tension V_{GS} est positive pour un transistor pMOS.

Le signal appliqué sur l'électrode de grille permet le basculement de la tension V_{GS} (la différence de tension entre la grille et la source) de part et d'autre de la tension de seuil du transistor, par exemple entre des valeurs positives et des valeurs négatives. Le basculement du transistor entre les états bloqués et passants a lieu lorsque la tension V_{GS} est égale à la tension de seuil du transistor.

Le signal appliqué sur l'électrode de commande du transistor d'injection formant l'interrupteur 4 peut être le potentiel V_{SUB} appliqué sur le substrat si le potentiel V_{SUB} est utilisé pour changer les conditions de polarisation de la photodiode 1.

Le signal appliqué sur l'électrode de commande du transistor d'injection peut encore être le potentiel VREF si ce dernier est utilisé pour changer les conditions de polarisation de la photodiode.

Il est également possible d'utiliser un autre signal qui est alors synchronisé avec le potentiel utilisé pour modifier les conditions de polarisation de la photodiode 1.

De manière préférentielle, une fréquence de basculement entre les deux états de la photodiode supérieure ou égale à 10Hz est utilisée ce qui permet de limiter la quantité de porteurs de charge parasites introduits dans le circuit de mesure 2. De manière encore plus préférentielle, une fréquence de basculement supérieure à 500Hz a démontré de très bons résultats. De manière également préférentielle, la fréquence de basculement est inférieure à 50kHz afin d'avoir une passivation efficace des pièges.

Le rapport cyclique entre l'autre état et la polarisation inverse de la photodiode 1 est compris entre 5% et 50% ce qui permet de limiter l'influence de la phase de non acquisition sur la fréquence de fonctionnement du circuit tout en conservant un effet très marqué sur la réduction du courant parasite par passivation des pièges. Le régime de non acquisition effective représente donc entre 5% et 50% de chaque période de fonctionnement. Il y a donc entre 5% et 50% de la période qui n'est pas utilisée pour stocker des charges dans le condensateur d'intégration. Dans un mode de réalisation préférentiel, la durée totale d'intégration des périodes d'acquisition est ajustée afin de tenir compte de la durée de non acquisition effective, c'est-à-dire la durée durant laquelle les charges ne sont pas collectées.

Durant l'acquisition effective des charges, la photodiode est polarisée en inverse. Une première borne de la photodiode 1 est soumise à la polarisation V_{SUB}. Dans le mode de réalisation de la figure 2, la seconde borne de la photodiode 1 est reliée au circuit 5 de polarisation qui imposent une tension de référence VREF qui est ici variable. De cette manière, la photodiode 1 est polarisée entre les tensions VREF et V_{SUB} imposées à chaque borne de la photodiode 1.

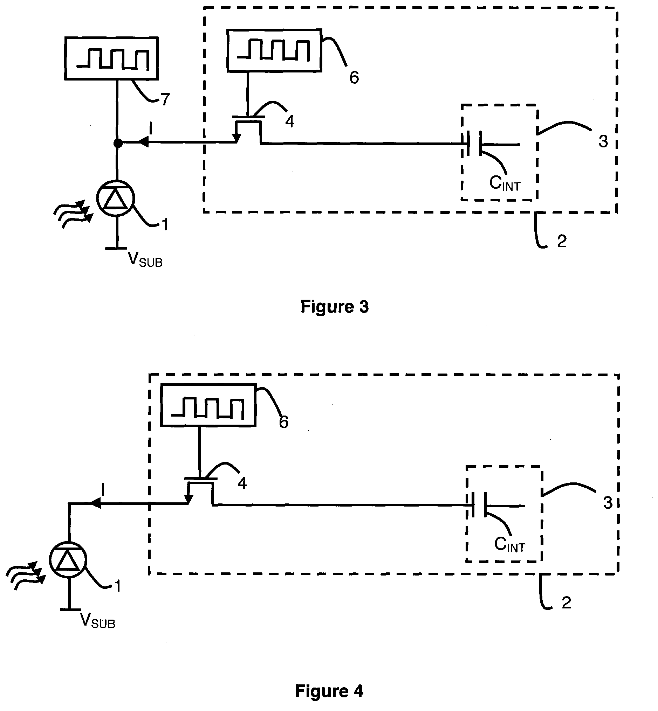

Dans un mode de fonctionnement particulier illustré à la figure 4, le circuit de lecture 2 est configuré de manière à imposer une tension de polarisation, par exemple la tension VREF, sur sa borne d'entrée.

La borne d'entrée du circuit de lecture 2 étant couplée à la photodiode 1 via l'interrupteur 4, la polarisation de la photodiode est appliquée en partie par le circuit de lecture. Il est alors avantageux de réaliser le basculement d'états de la photodiode en basculant l'état de l'interrupteur 4.

La photodiode 1 est en polarisation directe ou dépolarisée lorsque le transistor 4 est en accumulation/déplétion, donc dans un état bloqué, ce qui empêche le passage d'un courant entre l'intégrateur 3 et la photodiode 1. Ce mode de réalisation est particulièrement compact car une des tensions de polarisation est appliquée par le circuit de lecture et le basculement d'état est réalisé par le transistor d'injection. Ce mode de réalisation permet de réduire le nombre de lignes à intégrer dans un circuit de lecture associé à une photodiode.

Dans cette configuration, la photodiode 1 est en polarisation inverse lorsque le transistor 4 est en inversion ce qui permet le passage du courant vers l'intégrateur 3 comme précédemment. La photodiode 1 est en polarisation directe ou dans un état flottant lorsque le transistor 4 est en accumulation ou en déplétion. Les changements d'états sont réalisés simultanément pour la photodiode 1 et pour le transistor d'injection 4, ils ont le même rapport cyclique. Ce mode de réalisation évite tout problème de désynchronisation et de retard lié à l'utilisation de lignes différentes pour transporter les signaux.

Dans un mode particulier de réalisation illustré à la figure 4, le transistor d'injection 4 réalise la polarisation de la photodiode 1 au moyen du potentiel appliqué sur son électrode de commande. En modifiant la polarisation de l'électrode de commande, il y a modification des conditions de polarisation de la photodiode 1. Le circuit de détection est similaire à un circuit à injection directe avec une polarisation variable appliquée sur l'électrode de grille du transistor d'injection 4 si l'intégrateur 3 est formé par un condensateur d'intégration C_{INT}. Dans cette architecture particulière, le transistor d'injection 4 associé au potentiel alternatif appliqué sur son électrode de grille réalise le basculement de la photodiode 1 entre une polarisation inverse et un état flottant. Ce mode de réalisation est particulièrement avantageux car il est extrêmement compact.

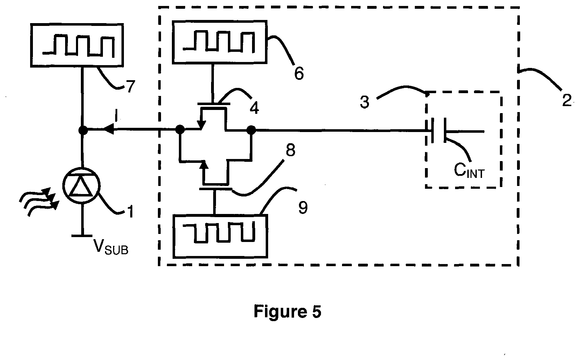

Dans un autre mode de réalisation illustré à la figure 5, le circuit de détection comporte un interrupteur additionnel 8 qui est connecté en parallèle aux bornes de l'interrupteur 4. De cette manière, l'interrupteur additionnel 8 est connecté entre la photodiode 1 et l'intégrateur 3. De manière préférentielle, les interrupteurs 4 et 8 sont des transistors parfaitement identiques afin de réduire les problèmes d'injection vers l'intégrateur.

Le circuit de détection comporte, en plus, un circuit 9 additionnel d'application d'une tension alternative sur l'électrode de commande de l'interrupteur additionnel 8. Cette tension alternative entraîne le basculement de l'interrupteur additionnel entre un état passant et un état bloqué. Les conditions de basculement entre les états passant et bloqué de l'interrupteur additionnel 8 peuvent être exprimées de la même manière que pour l'interrupteur 4 au moyen du signe et de l'amplitude du signal V_{GS} entre sa grille et son électrode de source pour un transistor à effet de champ.

De cette manière, durant une première période, une première tension additionnelle est appliquée sur l'électrode de commande ce qui permet d'avoir l'interrupteur additionnel 8 à l'état passant. Le transit des porteurs entre la photodiode 1 et l'intégrateur 3 est possible via ce transistor. Durant une seconde période, une seconde tension additionnelle est appliquée sur l'électrode de commande de l'interrupteur additionnel. Cette seconde tension additionnelle permet de bloquer le passage du courant entre la photodiode 1 et l'intégrateur 3 à travers cet interrupteur 8. La seconde tension additionnelle passe le transistor additionnel 8 dans un régime d'accumulation/déplétion.

Le circuit 9 additionnel d'application d'une tension alternative est avantageusement déphasé par rapport au circuit 6 d'application d'une tension alternative sur l'électrode de commande de l'interrupteur 4. Ce déphasage permet d'avoir pendant une certaine période, un des interrupteurs à l'état passant et l'autre transistor à l'état bloqué. De cette manière, il est possible d'obtenir une décorrélation entre le basculement de l'interrupteur 4 ou de l'interrupteur 8 et le basculement de la photodiode 1. La première période d'acquisition est alors décomposée en deux fractions chaque fraction étant associée à l'état passant d'au moins un des interrupteurs, par exemple un première fraction pour l'interrupteur 4 à l'état passant et une deuxième fraction pour l'interrupteur 8 à l'état passant.

De manière avantageuse, les transistors 4 et 8 sont configurés de manière à ce que les conditions de polarisation aux bornes de la photodiode soient identiques selon que le transistor 4 ou le transistor 8 sert au transit du signal vers le circuit de lecture 2.

Cette architecture peut être utilisée si la polarisation de la photodiode 1 est imposée par le circuit 5 de polarisation de la figure 2 ou par l'intermédiaire du circuit de lecture et plus précisément du transistor d'injection 4 comme cela est illustré à la figure 4.

Dans un autre mode de réalisation particulier, la polarisation de la photodiode 1 est réalisée au moyen du transistor d'injection 4 et du transistor additionnel 8. Ces deux transistors imposent successivement des conditions différentes de polarisation à la photodiode lorsqu'ils sont à l'état passant.

Quand les transistors 4 et 8 sont déphasés, la photodiode 1 est flottante ou en polarisation en directe lorsque les deux transistors sont bloqués.

Ainsi, dans une première fraction de la première période, l'un des deux transistors est passant et l'autre est bloquant ce qui passe la photodiode en inverse. Dans une deuxième fraction de la première période, les deux transistors sont passants ou ils changent d'état ensemble ce qui laisse la photodiode en polarisation inverse. Dans la deuxième période, les deux transistors sont bloqués et la photodiode est polarisée en directe ou dans un état flottant. Le circuit repasse ensuite dans les conditions de la première période. La photodiode est donc passivée durant la seconde période.

La réduction du bruit de type basse fréquence ou RTS permet d'obtenir des dispositifs de détection ayant un meilleur rapport signal sur bruit. Il permet également d'augmenter la température de fonctionnement du circuit de détection dans la mesure où ce type bruit parasite est thermiquement activé afin de conserver un rapport signal sur bruit donné. Cette augmentation de la température de fonctionnement est particulièrement avantageuse dans le domaine de l'infrarouge lorsque le circuit de détection est associé à des moyens de refroidissement qui peuvent alors être réduits ou éliminés. Ce point est particulièrement avantageux dans le cas des circuits de détection avec des photodiodes réalisées sur des substrats de type II-VI.

Le circuit de lecture permet, durant la phase d'intégration, de réduire voire d'éliminer la composante basse fréquence du bruit parasite.

Après une étape d'initialisation durant laquelle, le condensateur d'intégration C_{INT} est remis à zéro, le signal provenant de la photodiode est stocké dans le condensateur d'intégration C_{INT}. Durant cette phase d'acquisition, une polarisation variable est appliquée sur une électrode de commande du transistor d'injection 4 de manière à obtenir le basculement alternatif de son canal de conduction entre un régime d'inversion et un état de nature différente. Il y a alors recombinaison régulière des défauts du canal de conduction durant la phase d'acquisition. Une fois l'acquisition réalisée, le signal est traité puis le condensateur d'intégration est vidé.

## Revendications

1. Circuit de détection comportant :
- un interrupteur (4),
- une photodiode (1) connectée à une première borne principale de l'interrupteur (4),
- un intégrateur (3) connecté à une seconde borne principale de l'interrupteur (4) et agencé pour recevoir le signal émis par la photodiode (1),
**caractérisé en ce qu'**il comprend un circuit (7) de basculement alternatif de la polarisation de la photodiode (1) entre une polarisation en inverse et un autre état, l'interrupteur (4) étant configuré pour être à l'état bloquant lorsque la photodiode (1) est dans l'autre état.

2. Circuit selon la revendication 1, **caractérisé en ce qu'**il comporte un circuit de lecture (2) comprenant l'intégrateur (3), le circuit de lecture (2) étant configuré de manière à appliquer une tension de polarisation (V_{REF}) sur une des bornes de la photodiode (1) via l'interrupteur (4) et **en ce que** le circuit (7) de basculement alternatif de la polarisation de la photodiode (1) applique une tension sur une électrode de commande de l'interrupteur (4) de manière à ce que l'interrupteur soit alternativement à l'état bloquant et à l'état passant.

3. Circuit selon la revendication 2, **caractérisé en ce que** la tension de polarisation (V_{REF}) est appliquée sur l'électrode de commande d'un transistor d'injection formant l'Interrupteur (4), le transistor d'injection étant agencé de manière à former un circuit à injection directe.

4. Circuit selon l'une quelconque des revendications 1 à 3, **caractérisé en ce qu'**il comporte :
- un interrupteur additionnel (8) connecté en parallèle aux bornes de l'interrupteur (4) et
- un circuit (9) additionnel d'application d'une tension alternative sur l'électrode de commande de l'interrupteur additionnel (8) de manière à provoquer, dans l'interrupteur additionnel (8), le basculement entre un état bloquant et un état passant.

5. Circuit selon l'une quelconque des revendications 1 à 4, **caractérisé en ce que** la photodiode est réalisée sur un substrat de type II-VI ou de type III-V.

6. Circuit selon la revendication 5, **caractérisé en ce que** la photodiode est réalisée sur un substrat en InP, GaAs, GaAlAs ou HgCdTe.

7. Procédé de fonctionnement d'un circuit de détection utilisant un interrupteur (4) connecté entre une photodiode (1) et un intégrateur (3) **caractérisé en ce qu'**il comporte durant une première période l'application d'une première condition de polarisation aux bornes de la photodiode (1) pour polariser la photodiode (1) en inverse et durant une deuxième période l'application d'une deuxième condition de polarisation pour placer la photodiode (1) dans un autre état, l'interrupteur étant configuré de manière à être passant durant la première période et être bloquant durant la deuxième période, l'alternance entre les première et seconde périodes étant réalisée à une fréquence supérieure à 10Hz.

8. Procédé selon la revendication 7, **caractérisé en ce que** :
- l'intégrateur (3) est configuré de manière à appliquer un potentiel de polarisation sur une des électrodes de la photodiode (1),
- une première tension est appliquée sur une électrode de commande de l'interrupteur (4) de manière à ce que l'interrupteur soit passant et permettre le passage de porteurs de charge entre la photodiode (1) durant la première période et que
- une deuxième tension est appliquée sur l'électrode de commande de l'interrupteur (4) de manière à ce que l'interrupteur (4) soit bloquant et laisse une électrode de la photodiode (1) à un potentiel flottant durant la deuxième période.

9. Procédé selon l'une des revendications 7 et 8, **caractérisé en ce qu'**un interrupteur additionnel (8) est connecté en parallèle aux bornes de l'interrupteur (4) et **en ce que** durant une première fraction de la première phase, une première tension additionnelle est appliquée sur une électrode de commande de l'interrupteur additionnel (8) de manière à mettre l'interrupteur additionnel (8) dans un état passant et durant une deuxième fraction de la première phase une deuxième tension additionnelle est appliquée sur l'électrode de commande de manière à bloquer le passage du courant et placer l'interrupteur additionnel (8) à l'état bloquant.

## Patentansprüche

1. Detektionsschaltung, umfassend:
- einen Schalter (4),
- eine Fotodiode (1), die an eine erste Hauptklemme des Schalters (4) angeschlossen ist,
- einen Integrator (3), der an eine zweite Hauptklemme des Schalters (4) angeschlossen und dazu vorgesehen ist, das von der Fotodiode (1) ausgesandte Signal zu empfangen,
**dadurch gekennzeichnet, dass** sie eine Wechselkippschaltung (7) der Polarisation der Fotodiode (1) zwischen einer umgekehrten Polarisation und einem anderen Zustand umfasst, wobei der Schalter (4) eingerichtet ist, um im Blockierungszustand zu sein, wenn die Fotodiode (1) in dem anderen Zustand ist.

2. Schaltung nach Anspruch 1, **dadurch gekennzeichnet, dass** sie eine Leseschaltung (2) umfasst, die den Integrator (3) umfasst, wobei die Leseschaltung (2) eingerichtet ist, um eine Polarisationsspannung (V_{REF}) an eine der Klemmen der Fotodiode (1) über den Schalter (4) anzulegen, und dass die Wechselkippschaltung (7) der Polarisation der Fotodiode (1) eine Spannung an eine Steuerelektrode des Schalters (4) anlegt, so dass der Schalter alternativ im Blockierungs- und im Durchgangszustand ist.

3. Schaltung nach Anspruch 2, **dadurch gekennzeichnet, dass** die Polarisationsspannung (V_{REF}) an die Steuerelektrode eines den Schalter (4) bildenden Injektionstransistors angelegt wird, wobei der Injektionstransistor dazu vorgesehen ist, eine Direktinjektionsschaltung zu bilden.

4. Schaltung nach einem der Ansprüche 1 bis 3, **dadurch gekennzeichnet, dass** sie umfasst:
- einen zusätzlichen Schalter (8), der parallel an die Klemmen des Schalters (4) angeschlossen ist, und
- eine zusätzliche Schaltung (9) zum Anlegen einer Wechselspannung an die Steuerelektrode des zusätzlichen Schalters (8), um in dem zusätzlichen Schalter (8) das Kippen zwischen einem Blockierungszustand und einem Durchgangszustand hervorzurufen.

5. Schaltung nach einem der Ansprüche 1 bis 4, **dadurch gekennzeichnet, dass** die Fotodiode auf einem Substrat des Typs II-VI oder des Typs III-V hergestellt ist.

6. Schaltung nach Anspruch 5, **dadurch gekennzeichnet, dass** die Fotodiode auf einem Substrat aus InP, GaAs, GaAlAs oder HgCdTe hergestellt ist.

7. Funktionsverfahren einer Detektionsschaltung, die einen Schalter (4) verwendet, der zwischen einer Fotodiode (1) und einem Integrator (3) angeschlossen ist, **dadurch gekennzeichnet, dass** es während einer ersten Phase das Anlegen einer ersten Polarisationsbedingung an die Klemmen der Fotodiode (1), um die Fotodiode (1) umgekehrt zu polarisieren, und während einer zweiten Phase das Anlegen einer zweiten Polarisationsbedingung, um die Fotodiode (1) in einen anderen Zustand zu bringen, umfasst, wobei der Schalter eingerichtet ist, um während der ersten Phase durchgängig zu sein und während der zweiten Phase blockierend zu sein, wobei der Wechsel zwischen den ersten und zweiten Phasen mit einer Frequenz über 10Hz erfolgt.

8. Verfahren nach Anspruch 7, **dadurch gekennzeichnet, dass**:
- der Integrator (3) eingerichtet ist, um ein Polarisationspotential an eine der Elektroden der Fotodiode (1) anzulegen,
- eine erste Spannung an eine Steuerelektrode des Schalters (4) angelegt wird, so dass der Schalter durchgängig ist und den Durchgang von Ladungsträgern zwischen der Fotodiode (1) während der ersten Phase zu ermöglichen, und
- eine zweite Spannung an die Steuerelektrode des Schalters (4) angelegt wird, so dass der Schalter (4) blockierend ist und eine Elektrode der Fotodiode (1) auf einem schwebenden Potential während der zweiten Phase lässt.

9. Verfahren nach einem der Ansprüche 7 und 8, **dadurch gekennzeichnet, dass** ein zusätzlicher Schalter (8) parallel an die Klemmen des Schalters (4) angeschlossen ist, und dass während eines ersten Bruchteils der ersten Phase eine erste zusätzliche Spannung an eine Steuerelektrode des zusätzlichen Schalters (8) angelegt wird, um den zusätzlichen Schalter (8) in einem durchgängigen Zustand zu bringen, und während eines zweiten Bruchteils der ersten Phase eine zweite zusätzliche Spannung an die Steuerelektrode angelegt wird, um den Durchgang des Stroms zu blockieren und den zusätzlichen Schalter (8) in den blockierenden Zustand zu bringen.

## Claims

1. Detection circuit comprising:
- a switch (4),
- a photodiode (1) connected to a first main terminal of the switch (4),
- an integrator (3) connected to a second main terminal of the switch (4) and arranged to receive the signal emitted by the photodiode (1),
**characterized in that** it comprises a circuit (7) for performing alternate switching of the bias of the photodiode (1) between a reverse bias and another state, the switch (4) being configured to be in the blocking state when the photodiode (1) is in the other state.

2. Circuit according to claim 1, **characterized in that** it comprises a readout circuit (2) comprising the integrator (3), the readout circuit (2) being configured so as to apply a bias voltage (VREF) on one of the terminals of the photodiode (1) via the switch (4) and **in that** the circuit (7) for performing alternate switching of the bias of the photodiode (1) applies a voltage on a control electrode of the switch (4) so that the switch is alternately in the blocking state and in the passing state.

3. Circuit according to claim 2, **characterized in that** the bias voltage (V_{REF}) is applied on the control electrode of an injection transistor forming the switch (4), the injection transistor being arranged so as to form a direct injection circuit.

4. Circuit according to any one of claims 1 to 3, **characterized in that** it comprises:
- an additional switch (8) connected in parallel to the terminals of the switch (4) and
- an additional circuit (9) for applying an AC voltage on the control electrode of the additional switch (8) so as to cause switching between the blocking state and the passing state in the additional switch (8).

5. Circuit according to any one of claims 1 to 3, **characterized in that** the photodiode is formed on a substrate of II-VI or III-V type.

6. Circuit according to claim 5, **characterized in that** the photodiode is formed on a substrate made from InP, GaAs, GaAIAs or HgCdTe.

7. Operating method of a detection circuit using a switch (4) connected between a photodiode (1) and an integrator (3), **characterized in that** it comprises application of a first bias condition on the terminals of the photodiode (1) during a first period so as to reverse bias the photodiode (1) and application of a second bias condition during a second period so as to place the photodiode (1) in another state, the switch being configured so as to be in the passing state during the first period and to be in the blocking state during the second period, alternation between the first and second periods being performed at a frequency of more than 10Hz.

8. Method according to claim 7, **characterized in that**:
- the integrator (3) is configured so as to apply a bias voltage on one of the electrodes of the photodiode (1),
- a first voltage is applied on a control electrode of the switch (4) so that the switch is in the passing state and charge carriers are able to flow between the photodiode (1) and integrator (3) during the first period, and **in that**
- a second voltage is applied on the control electrode of the switch (4) so that the switch (4) is in the blocking state and leaves an electrode of the photodiode (1) at floating potential during the second period.

9. Method according to one of claims 7 and 8, **characterized in that** an additional switch (8) is connected in parallel to the terminals of the switch (4) and that, during a first fraction of the first phase, a first additional voltage is applied on a control electrode of the additional switch (8) so as to turn the additional switch (8) to the passing state, and during a second fraction of the first phase, a second additional voltage is applied on the control electrode so as to prevent flow of the current and to turn the additional switch (8) to the blocking state.
